# EUROPEAN PATENT APPLICATION

(11) **EP 1 959 443 A1**
(43) Date of publication of application: **20.08.2008**
(21) Application number: 07150490.6
(22) Date of filing: 31.12.2007
(51) Int. Cl.: G11B 7/24, G11B 7/26

(54) **Method for producing optical storage media having multiple information layers**

(30) Priority: 14.02.2007 DE 102007007323
(71) Applicant: Singulus Technologies AG, 63796 Kahl/Main (DE)
(72) Inventor: JAKOB, Thomas, 63791, Karlstein (DE)
(74) Representative: Vossius & Partner

(57) **Abstract**

The present invention relates to a method for producing a two- or multilayer optical storage medium, wherein a first half-substrate with a first information layer is produced and a first metal layer is applied to the surface of the first half-substrate containing the information structure. Furthermore, a second half-substrate with a second information structure is produced and a separation layer is applied onto the surface of the second half-substrate containing the information structure. The two half-substrates are glued together by means of an adhesive, wherein the metal layer of the first half-substrate and the separation layer of the second half-substrate face each other with an adhesive layer in-between. After curing of the adhesive, the separation layer of the second half-substrate is separated from the adhesive layer and a second metal layer is applied onto the adhesive layer.

## Description

The present invention relates to a method for producing two- or multilayer optical storage media, in particular DVD-141DVD-18 discs, write-once recordable dual layer DVDs or optical storage media of the third generation like HD DVDs and multilayer blu-ray discs.

When producing optical storage media having multiple information layers, two separate half-substrates are produced by an injection moulding process, each substrate carrying an information structure. Subsequently, said two half-substrates are bonded together so that both information structures can be read out when a laser is appropriately focussed.

In case of optical storage media of the third generation, i.e.. e.g., blu-ray discs, the information structure is closely below the transparent cover layer. While the transparent cover layer, e.g., in case of a DVD or HD DVD, has a thickness of about 0.6 mm, the cover layer of a blu-ray disc has a thickness of only about 0.1 mm. Usually, a polycarbonate substrate carries the information structures. This has the effect that when manufacturing a two-layer or multilayer blu-ray disc, the half-substrate corresponding to the transparent cover layer and having an information structure is very thin and thus difficult to handle, or transmits its structure to another polymer e.g., the adhesive, via a so-called 2P process and is then separated again later.

In a 2P process, two substrates which each contain information structures, and of which at least the first substrate is coated or sputtered with a metal, are glued together with a UV-curing lacquer. When the lacquer is cured, the second substrate, which only serves for transmitting information into the lacquer, is separated from the first substrate, which is made of the metal layer and the lacquer and, possibly, a second metal layer. It is decisive that the adhesive forces between the second substrate and the lacquer or the second metal layer are the lowest of the entire composition. If there is no second metal layer on the first substrate after the separation, this layer has to be applied subsequently as reflection layer for the second information layer. This metal layer is then provided with a cover or protective layer.

Further, in a so-called PMMA process, which is described, e.g., in WO 00/18531 and WO 01/49482, a basic substrate of polycarbonate (PC) is used as a first half-substrate. The second information structure is applied into a second half-substrate of polymethylmethacrylate. Afterwards the two information structures are metallized by sputtering and glued. After curing of the adhesive, the PMMA substrate is separated so that the metal layer applied by sputtering, which bears the information structure, is exposed. A correspondingly thin transparent cover and protective layer is then applied to this metal layer, e.g., via spin coating.

In a further known method, the second information structure is placed into a substrate of cyclopolyolefin (CP) (cf., e.g., EP-A-1 378 898). This CP substrate is then glued together with a conventionally produced, metallized PC substrate containing the first information structure so that the information structure in the CP substrate is imprinted or embossed into the adhesive. After curing of the adhesive, the CP substrate which only slightly sticks to the cured adhesive is removed and the adhesive layer whose surface reflects the information structure is metallized. Finally the transparent cover and protective layer is applied onto the metallized information layer again.

According to the so-called PC method, both information structures are respectively placed in a PC substrate (cf., e.g., WO 2005/112020). However, only the information structure of the substrate which is to form the basic substrate later is metallized. The second substrate is coated with a hard lacquer. The interface between the hard lacquer and the second substrate is the weak point in the following separation process. The hard lacquer layer is then bonded to the metallized layer of the first half substrate. After curing of the adhesive the PC substrate is removed so that the information structure formed in the hard lacquer layer is exposed. This structure is then metallized and provided with a transparent cover and protective layer.

A variant of this PC process, the so-called PC sputtering process, which is described, e.g., in WO 2006/002561 and WO 2005/035237, is shown in Figure 1. A separation layer 11, consisting, e.g., of graphite, a soft metal or an organic material, and afterwards a metal layer 12 are applied to the second PC substrate 10. This metal layer may contain, e.g., aluminium or silver. This stack is then glued by means of an adhesive 3 with the first substrate 1, on which a metal layer has already been applied. Thus, the weak point is the separation layer 11, which loosens completely from the metal layer 12 and after separation remains on the stack comprising the first substrate 1, the metal layer 2 and the adhesive layer 3. Here, too, a transparent cover and protective layer 4 is applied subsequently.

It is an object of the present invention to provide an alternative method for producing optical storage media having multiple information layers. The method according to the invention should be cheaper, should offer the advantages of the above-described PC sputtering method and should provide at the same time a simple approach for influencing the adhesive layer thickness distribution.

This object is achieved with the features of the claims.

According to the present invention, the second substrate is provided with a separation layer, and said layer is glued with the first substrate onto which the first metal layer has been applied. Thus, the invention ensures the separability in that a separation layer is applied to the second substrate, the separation layer exhibiting very low adhesion properties vis-à-vis the lacquer or adhesive. After the separation, the separation layer remains on the second half-substrate. The second information layer is thus imprinted into the adhesive layer. Subsequently, a second metal layer is deposited as reflector on this layer. Finally, if necessary, a transparent cover and protective layer is applied.

Graphite, metals, in particular soft metals or their alloys, dielectric layers and carbonaceous layers, e.g., organic, in particular fluorinated layers, can be used as separation layer. Sputtering techniques can be used for the layer application. However, the application of layers can also be carried out by means of vapour deposition or the so-called PECVD method (plasma enhanced chemical vapour deposition).

According to the present invention, the separation layer has to ensure the separation from a lacquer or adhesive layer. Contrary to the requirement according the above-described PC sputtering method, where the separation from a metal layer takes place, the demands on the separation layer are reduced in the present invention. Consequently, materials can be chosen for the separation layer which enable the production of separation layers which are cheaper than those produced according to the prior art method. Further, according to the present invention, both substrates can be made of one material, i.e., polycarbonate so that no further material supply has to be introduced in the production process. Moreover, regarding the production of the adhesive layer, which has high demands on the homogeneity of the layer thickness, no two lacquer processes but only one has to be controlled, and the homogeneity of the adhesive layer can be easily influenced by radiation during spin coating.

Further, the present invention provides an optical storage medium produced according to the method of the invention.

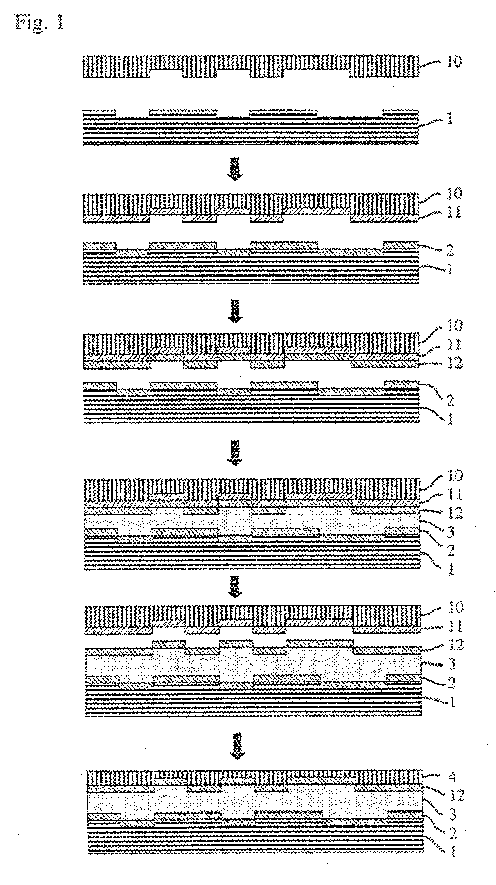

The invention is further described in detail with reference to the Figures, wherein
- Figure 1: shows the process steps of a two-layer optical storage medium according to the PC sputtering method and
- Figure 2: shows the process steps of a two-layer optical storage medium according to the present invention.

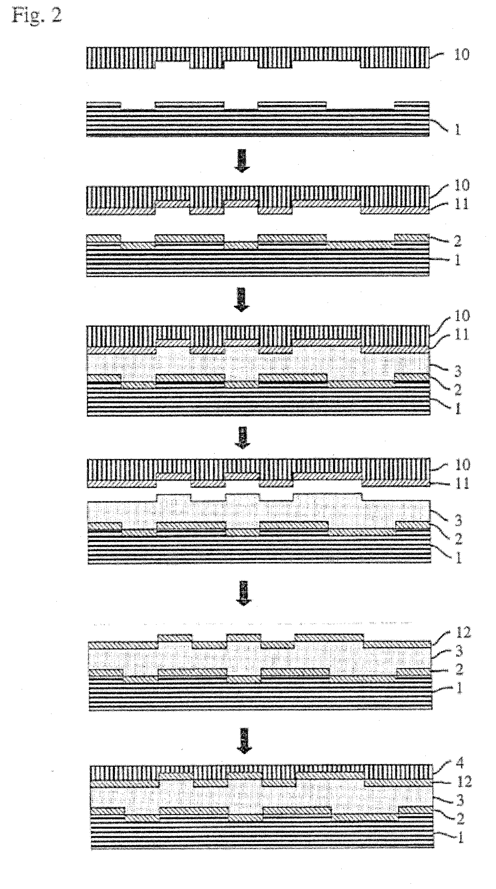

In a first step, Figure 2 shows two half-substrates 1 and 10 produced separately from each other. Both half-substrates are preferably produced in a conventional manner from polycarbonate by means of an injection moulding machine. The half-substrate 1 carries the information of the layer 0 of the optical storage medium and constitutes the basic substrate. A metal layer of, e.g., aluminium or silver, is applied to the basic substrate 1.

The second substrate 10 carries the information of the layer 1 of the optical storage medium. A separation layer 11 is applied to the second substrate. As separation layer all materials can be used which have a very low adhesion with regard to the used adhesive layer. Examples for such materials are graphite, metals, in particular soft metals, and their alloys. Further, dielectric layers or carbonaceous layers, i.e., organic, and in particular fluorinated layers, can be used.

The layers can be applied with conventional sputtering techniques. Moreover, it is conceivable to use vapour deposition or the PECVD method (plasma enhanced chemical vapour deposition) for the application of layers.

Subsequently, the two half-substrates are glued together with an adhesive. The curing of the adhesive is preferably carried out by irradiating the stack of the two half-substrates with ultraviolet light. After curing, the adhesive layer 3 can be separated from the separation layer 11. The separation layer 11 thus remains on the second half-substrate 10. The information layer of the second half-substrate 10 is imprinted in the adhesive layer 3.

Afterwards, as reflector, a second metal layer 12 has to be applied to the adhesive layer 3, wherein the above-described materials and the techniques for the application of layers can be used. Finally, the metal layer 12 is provided with a transparent cover and protective layer 4.

The method according to the present invention can also be used for the production of optical storage media having more than two information layers. To this end, a further information layer with a removed separation layer thereon is glued onto the stack of the first substrate 1, the first metal layer 2, the adhesive layer 3 and the second metal layer 12 and the corresponding steps of the method are repeated.

## Claims

1. A method for producing a two- or multilayer optical storage medium comprising the steps of:
producing a first half-substrate with a first information layer;
applying a first metal layer (2) onto the surface of the first half-substrate (1) which contains the information structure;
producing a second half-substrate (10) with a second information structure;
applying a separation layer (11) onto the surface of the second half-substrate (10) which contains the information structure;
gluing the two half-substrates together by means of an adhesive, wherein the metal layer (2) of the first half-substrate and the separation layer (11) of the second half-substrate face each other with an adhesive layer (3) in-between;
curing of the adhesive;
separating the separation layer (11) of the second half-substrate (10) from the adhesive layer (3); and
applying a second metal layer (12) onto the adhesive layer (3).

2. The method according to claim 1, wherein the first and the second half-substrates (1, 10) are produced by injection moulding of polycarbonate.

3. The method according to claim 1 or 2, wherein the first and the second metal layers (2, 12) comprise aluminium or silver.

4. The method according to any one of the preceding claims, wherein the separation layer (11) is made of graphite or metal, in particular a soft metal, or an alloy of metals.

5. The method according to any one of claims 1 to 3, wherein the separation layer (11) is a dielectric layer or comprises carbon or organic materials, in particular fluorinated organic materials.

6. The method according to any one of the preceding claims, wherein the separation layer (11) and/or the metal layers (2, 12) are applied by sputtering, vapour deposition or by means of a PECVD process.

7. The method according to any one of the preceding claims, wherein the adhesive layer (3) is cured by irradiation with ultraviolet light.

8. The method according to any one of the preceding claims, further comprising the following steps:
producing a further half-substrate with another information structure,
applying a separation layer onto the surface of the further half-substrate containing the information structure;
gluing the further half-substrate by means of an adhesive, wherein the second metal layer (12) and the separation layer applied on the further half-substrate face each other with an intermediate adhesive layer;
curing the adhesive and separating the adhesive layer applied on the further half-substrate from the adhesive layer.

9. The method according to any one of the preceding claims further comprising the step of applying a transparent cover and protective layer (4).

10. The method according to any one of the preceding claims, wherein the optical storage medium is a blu-ray disc or an HD DVD.

11. Optical storage medium which is producible according to the method of any one of the preceding claims.
